# EUROPÄISCHE PATENTANMELDUNG

(11) **EP 0 896 933 A2**
(43) Veröffentlichungstag der Anmeldung: **17.02.1999**
(21) Anmeldenummer: 98112733.5
(22) Anmeldetag: 09.07.1998
(51) Int. Cl.: B65D 88/66

(54) **Schüttgutaustragsvorrichtung**

(30) Priorität: 12.07.1997 DE 19729746
(71) Anmelder: Stein, Georg, 49124 Georgmarienhütte (DE)
(72) Erfinder: Stein, Georg, 49124 Georgmarienhütte (DE)

(57) **Zusammenfassung**

Es wird eine Schüttgutaustragvorrichtung vorgestellt, die vorzugsweise aus wenigstens einem Austragswerkzeug (5) und einem dieses aufnehmenden, durch ein Erregeraggregat in oszillierende Bewegung versetzten, Träger (3) besteht, wobei der Schüttgutaustragvorrichtung in Schüttgutaustragsrichtung gesehen wenigstens ein Entkopplungsorgan (2, 4) vorgeschaltet ist und das Austragswerkzeug (5) unmittelbar in den freien Schüttgutdurchgangsquerschnitt des Schüttgutes montiert ist.

## Beschreibung

Die Erfindung betrifft eine Schüttgutaustragvorrichtung, wie sie überwiegend für schwerfließende, grobkörnige, klebende, haftende oder andere Fördergüter, zu denen auch Schüttgüter zählen, zum Einsatz kommt.
Bei diesen Schüttgütern besteht zumeist das Problem, daß sie aufgrund ihrer Haftbeziehungsweise Klebneigung nur über eine Austragunterstützung aus den Vorratsbehältern, beispielsweise einem Silo, abgeführt werden können, da sie naturgemäß verstärkt an den Wandungen haften bleiben und zu einer Brückenbildung neigen. Unter Brückenbildung ist eine stetig zunehmende Verbindung der Schüttgutpartikel zu verstehen, sodaß dadurch eine anwachsende Verkrustung entsteht.
Unter einer Austragunterstützung ist allgemein jedes Mittel zu verstehen, das ein Anhaften der Schüttgüter an den Behälterwänden verhindert oder bereits anhaftende Rückstände, wie beispielsweise die zuvor beschriebenen Brücken zum Einsturz bringt, und somit ein Fließen des Produktes erzeugt.

Derzeit sind nur Austragshilfen für Schüttgüter bekannt, die, wenn sie robust und einfach aufgebaut sind, keine optimalen Austragsergebnisse erbringen, das heißt, hier bleiben an den Behälterwandungen Rückstände zurück.
Andere Einrichtungen weisen verhältnismäßig gute Austragsergebnisse auf, sind jedoch aufwendig aufgebaut und damit kostenintensiv.

Zur Austragserleichterung des Schüttgutes sind beispielsweise Vibrationseinrichtungen wie Vibrationsböden oder Vibrationstrichter bekannt.

Ferner werden Aggregate wie Klopfer, Fließbettvorrichtungen oder Vibrationsmotoren, die unmittelbar außen an der Behälterwand angebracht sind, verwendet, Brücken im Inneren des Behälters zu zerstören.
Diesen Einrichtungen ist jedoch gemein, daß sie durch ihre äußere Montage an der Behälterwandung bei schwerfließenden Schüttgütern weniger effektiv sind als Vorrichtungen, die unmittelbar im Innern des Behälters angeordnet sind.
Problematisch ist hier bei der Verwendung von Rührwerken die Abdichtung der rotierenden Bauteile. Insbesondere in der Nahrungsmittelindustrie ist es aus hygienischen Gründen zwingend erforderlich, eine größmögliche Dichtheit der relativ zueinander beweglichen Teile zu gewährleisten, sofern diese mit den Nahrungsmitteln in Kontakt treten. Rückstände dieser Produkte in mangelhaft abgedichteten Systemen bergen die Gefahr von Fäulnisprozessen und damit sich entwickelnden Krankheltserregern in sich, sodaß die Anlage insgesamt unbrauchbar werden kann.
Die Konstruktion und Fertigung derartiger Rührwerke in Schüttgutbehältern ist demnach ebenfalls aufwendig und teuer.

Aus DE 31 22 213 C1 ist beispielsweise eine derartige elektromotorisch betriebene Vorrichtung zum Austragen von Schüttgut aus einem Bunker bekannt, die insbesondere zum dosierten Austragen von Schüttgut auf ein nachgeschaftetes Förderband oder dergleichen verwendet wird. Diese Vorrichtung weist einen oberen Trichter zur Schüttgutaufnahme und einem mit diesem elastisch verbundenen, zur Schüttgutabgabe vorgesehenen, unteren Trichter auf. Der obere Trichter ist mit dem unteren Trichter mittels eines im wesentlichen zylindrisch ausgestalteten, elastisch gelagerten Zwischenringes verbunden. Darüber hinaus sind für eine Vorrichtung nach DE 31 22 213 C1 mindestens zwei Unwuchtmotoren erforderlich, die an dem elastisch gelagerten Zwischenring so angeordnet sind, daß sie an diesem eine Drehpendelbewegung mit sinusförmigem Ablauf auslösen. Der Zwischenring ist seinerseits mit einem konzentrischen innenring verbunden, der einen nach oben gerichteten konischen Dachabschnitt aufweist.
Nach unten bogenförmig ausgebildete, untere Transportflächen des Schüttgutes weisen mittige Auslauföffnungen auf, durch die das Schüttgut abgeführt wird.
Eine derartige Anlage ist beispielhaft für den enormen Aufwand, der erforderlich ist, um eine elektromotorisch betriebene, rührwerkähnliche Austragshilfe für schwerfließende Schüttgüter im innenraum eines Behälters einzusetzen.

Der Erfindung liegt daher das technische Problem zugrunde, eine Schüttgutaustragvorrichtung zu schaffen, die einfach und kostengünstig herstellbar ist, eine geringe Störanfälligkeit aufweist und universell eingesetzt werden kann.

Die Erfindung löst diese Problemstellung mit den Merkmalen der Patentansprüche 1 oder 2.

Eine erfindungsgemäße Schüttgutaustragvorrichtung besteht demnach grundsätzlich aus wenigstens einem durch ein Erregeraggregat in oszilierende Bewegung gebrachten Austragswerkzeug.
Als Erregeraggregate können beispielsweise Vibrationsmotoren, Exzenterantriebe, pneumatisch betätigte Zylinder oder ähnliche Vorrichtungen verwendet werden.
Um eine aufgabengemäß kostengünstige Variante einer Schüttgutaustragvorrichtung zu schaffen, wird jedoch vorzugsweise nur ein Erregeraggregat verwendet.
Der Schüttgutaustragvorrichtung sollte in Schüttgutaustragsrichtung gesehen, wenigstens ein Entkopplungsorgan vorgeschaltet sein. Dadurch wird eine Entkopplung des Gesamtsystems von den Erregerschwingungen erreicht. Für die Erfindung ist es wesentlich, daß das Austragswerkzeug unmittelbar auf einem Träger in den freien Schüttgutdurchgangs-querschnitt des Schüttgutes montiert ist. Wird die Schüttgutaustragvorrichtung beispielsweise unterhalb eines mit Schüttgut befüllten Behälters montiert, so würde das Austragswerkzeug entgegen der Austragsrichtung des Schüttgutes in diesen Behälter hineinragen und durch die Erregung, das heißt durch die Schwingungen des Austragswerkzeuges das Verkleben, Haften beziehungsweise die Brückenbildung des Schüttgutes verhindern, sodaß eine störungsfreie Abführung gewährleistet ist.

Das Austragswerkzeug kann symmetrisch oder asymmetrisch zur Mittenachse der Schüttgutaustragvorrichtung ausgeführt sein.

Hierbei wird das Werkzeug über den Träger durch Erregerschwingungen bewegt und somit das mit ihm als Einheit ausgeführte Austragswerkzeug. Selbstverständlich können auf dem Träger auch mehrere Austragswerkzeuge angeordnet sein.

Weitere Ausgestaltungen der Erfindung sind Gegenstand der Unteransprüche.

Durch die Erregung des Austragswerkzeuges beziehungsweise des Trägeres, also durch die bewußte Einleitung von Erregerschwingungen in das System, wird es erforderlich, die übrigen Elemente von diesen Schwingungen zu entkoppeln, das heißt, die Schwingungen von den restlichen Bauteilen fern zu haltern. Hierfür werden ein oder mehrere Entkopplungsorgane verwendet.
Je aufwendiger eine Schwingungsentkopplung ausgeführt ist, um so stärker ist die Beruhigung der freizuhaltenden Bauteile. Dementsprechend kann es vorteilhaft sein, mehrere Entkopplungsorgane an einer Schüttgutaustragvorrichtung vorzusehen.
Eine derartige Schüttgutaustragvorrichtung ist hygienisch und wartungsfreundlich und gestattet die Aktivierung des Austragswerkzeuges ohne Durchführungen und Dichtungen, wie dies bei bisher bekannten Vorrichtung dieser Verwendung zumeist der Fall war.

Die Abdichtung gegenüber der Umgebung spielt eine wichtige Rolle, da beispielsweise in der Lebensmittelindustrie dauerhaft verhindert werden muß, daß Verunreinigungen an das Schüttgut gelangen.
Es können auch mehrere flansche hintereinander angeordnet werden, die jeweils durch Dichtelemente voneinander entkoppelt sind. Als Dichtelement sowie als Systementkopplung sind beispielsweise Faltenbälge, Dichtungsbälge, Kompensatoren oder ähnliche Ausführungen einsetzbar. Diese sollten vorteilhafter Weise aus Elastomerwerkstoffen hergestellt sein.

Weitere Ausgestaltungen des Erfindungsgedankens sehen beispielsweise auch vor, daß der Träger mit dem einteilig oder mehrteilig ausgeführten Austragswerkzeug sowohl nach oben als auch nach unten, in Fließrichtung des Produktes gesehen, montiert ist.
Um das übrige System von den Bewegungen des Trägeres freizuhalten, werden somit die Entkopplungsorgane zwischen den Träger und die vor- oder nachgeschalteten Systeme montiert.
Der Träger ist erfindungsgemäß hauptsächlich für annähernd horizontal schwingende Bewegungen vorgesehen. Er kann jedoch auch für beliebige Bewegungen in beliebigen Richtungen augelegt werden.

Weiterhin kann es um eine erfindungsgemäße Schüttgutaustragvorrichtung herum erforderlich sein, einzelne Elemente gegen eine Überlastung abzusichern. Diese Überlastung kann beispielsweise im Dichtelementbereich auftreten, wenn das Erregeraggregat an dem Träger befestigt wird. Da vorzugsweise nur ein Erregeraggregat verwendet werden soll, kann dann im Trägerbereich eine einseitige überwiegend axial gerichtete Zugbelastung auftreten, die abgefangen werden muß. Aus diesem Grund sollte zwischen dem Träger und dem oberen oder unteren Flansch wenigstens eine Stabilisierungseinrichtung, wie beispielsweise eine Feder vorgesehen werden, die bezogen auf die Mittenachse eine Längenausdehnung des Entkopplungsorgans in axialer Richtung begrenzt.

Die Systemsteifigkeit kann über Zugstangen erreicht werden. Eine Befestigung der Zugstangen jeweils am obersten und am untersten Flansch bietet sich als vorteilhaft an.

Derartige Maßnahmen sind insbesondere bei fehlender fester Verankerungsmöglichkeit der Systemkomponenten und damit notwendig werdenden konstruktiven Versteifungen erforderlich.

Zur Abführung des Schüttgutes sollte ein Auslauf am unteren, der Anlage abgekehrten, Ende vorgesehen werden. Es kann hier ein Auslaufflansch eingesetzt oder der unterste Unterflansch als Auslauf verwendet werden. An diesem kann dann ein steuer-oder regelbares Absperrorgan montiert sein, um im Bedarfsfall den Schüttgutaustrag zeitweilig zu stoppen oder zu reduzieren. Als Absperrorgan sind beispielsweise Schieber, Klappen, Zellenradschleusen oder andere Vorrichtungen geeignet.

Ein besonderer Vorteil einer Schüttgutaustragvorrichtung gemäß der vorliegenden Erfindung ist jedoch auch in der Austauschbarkeit des Austragswerkzeugs zu sehen. Es ist zu diesem Zweck lösbar mit dem Träger verbunden. Insbesondere bei häufig wechselnden Schüttgütern ist eine Austauschbarkeit sinnvoll.

An den Oberflanschen der Entkopplungsorgane sollten insbesondere beim Einsatz einer erfindungsgemäßen Schüttgutaustragvorrichtung in der Lebensmittelindustrie oder bei der Verwendung für abrasive Medien Leitbleche angebracht sein. Die Leitbleche sind in Schüttgutaustragsrichtung angeordnet und können geringfügig zentripetal nach innen gerichtet sein, oder ausschließlich in axialer Richtung verlaufen. Sie werden vorzugsweise in den Bereichen angebracht, in denen das Schüttgut Kontakt mit den Dichtelementen haben könnte, um das Schüttgut quasi an den Dichtelementen vorbei zu führen.

Eine erfindungsgemäße Schüttgutaustragvorrichtung ist universell einsetzbar. Sie kann sowohl an runden, als auch an eckigen Behälterausläufen genutzt werden.

Durch die optimierte Schwingungsentkopplung ist sogar ein Einsatz an Verwiegebehältern möglich.

Es wird durch die Veränderbarkeit der Erregerfrequenz mit der der Träger bewegt wird, kombiniert mit dem Einsatz speziell ausgeformter Werkzeuge erstmals möglich, eine individuelle Einstellung der Schüttgutaustragvorrichtung auf das jeweilige Produkt zu realisieren. Darüber hinaus können verschiedene Werkzeuge beliebig auf dem Träger angeordnet werden, was ebenfalls für einen universellen Einsatz einer erfindungsgemäßen Schüttgutaustragvorrichtung spricht.

Eine erfindungsgemäße, bevorzugte Ausführungsform wird beispielhaft nachfolgend anhand der Zeichnungen beschrieben.

Es zeigen:
**Figur 1**: eine schematische Darstellung einer erfindungsgemäßen Schüttgutaustragvorrichtung im Schnitt
**Figur 2**: eine schematische Darstellung einer erfindungsgemäßen Schüttgutaustragvorrichtung mit Zugstangen und Stabilisatoren und
**Figur 3**: die Ansicht einer erfindungsgemäßen Schüttgutaustragvorrichtung gemäß der Pfeilrichtung III in Figur 2.

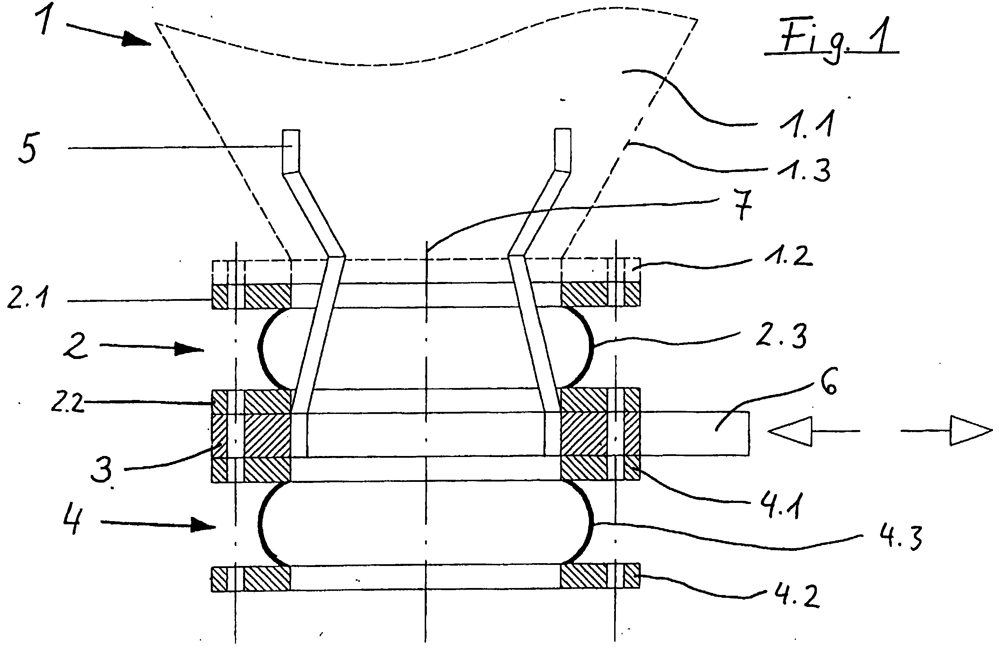

Eine Schüttgutaustragvorrichtung, wie sie beispielhaft in der Darstellung der Figur 1 gezeigt ist, besteht zunächst aus einem Schüttgutbehälter (1). Dieser Schüttgutbehälter ist vorliegend ein Silo, der, der besseren Übersichtlichkeit halber, nur ausschnittsweise dargestellt ist.
In diesem Schüttgutbehälter (1) wird das Schüttgut aufbewahrt. Der Auslauf (1.1) ist trichterförmig gestaltet und weist einen Anschlußflansch (1.2) auf, der mit einem Entkopplungsorgan (2) verbunden ist.
Dieses flexibel ausgeführte Entkopplungsorgan dient der Entkopplung der Anlage, insbesondere von Schwingungen, die von dem Schüttgutbehälter fern gehalten werden sollen.
Die Flexibilität des Entkopplungsorgans wird durch seinen Aufbau erreicht. Wie aus der Darstellung in der Figur 1 ersichtlich, ist das Entkopplungsorgan vorliegend ein

Anschlußflansch (1.2) des Schüttgutbehälters (1) verbunden ist, sowie aus einem Unterflansch (2.2).
Zwischen dem Ober- und dem Unterflansch ist ein flexibles, elastisches Dichtelement (2.3) eingesetzt, das hauptsächlich für die optimale Schwingungsentkopplung verantwortlich ist.

Unterhalb des Einlaufkompensators (2) ist ein Träger (3) angeschlossen. Dieser Träger ist durch ein in der Figur 1 nicht dargestelltes Erregeraggregat bewegbar. Er wird durch das Erregeraggregat in vorwiegend horizontal ausgerichtete Schwingungen versetzt. Das Erregeraggregat wird unmittelbar mit der Erregeraggregatanbindung (6) des Trägeres (3) verbunden.
Der Träger (3) nimmt ein Austragswerkzeug (5) lösbar auf. Dieses ist in eine innere Aufnahme des Trägeres (3) eingefügt und bei der vorgestellten Ausführungsform einteilig ausgeführt.
Das Austragswerkzeug (5) ist symmetrisch zur Mittenachse (7) der Schüttgutaustragvorrichtung angeordnet und ragt bis in den Auslauf (1.1) des Schüttgutbehälters hinein. Seine Geometrie ist der Schüttgutbehälterwand (1.3) angepaßt, sodaß eine möglichst dichte Heranführung des Austragswerkzeugs (5) and die Schüttgutbehälterwand (1.3) möglich wird. Im oberen Bereich weist das Austragswerkzeug zangenartige Fortsätze auf, die das Schüttgut bei der Bewegung des Austragswerkzeugs zusätzlich auflockern.
Im unausgelenkten Zustand ist der Abstand zwischen der Außenoberfläche des Austragswerkzeugs (5) und der inneren Schüttgutbehälterwand (1.3) annähernd gleich dem Betrag der Bewegung des Trägeres (3) bei maximaler Erregung, sodaß eine Zerstörung des Austragswerkzeugs (5) sicher verhindert wird.
Unterhalb des Trägeres (3) ist bei der gezeigten Ausführung einer erfingungsgemäßen Schüttgutaustragvorrichtung ein zweiter Komensator montiert, der vorliegend ein Auslaufkompensator (4) ist. Dieser Auslaufkompensator (4) besteht widerum aus einem Ober- und einem Unterflansch (4.1 und 4.2), die durch ein Dichtelement (4.3) miteinander verbunden sind. Einlaufkompensator (2) und Auslaufkompensator (4) sind bei dieser Ausführung baugleich ausgeführt.
Durch eine derartige Schüttgutaustragvorrichtung wird eine optimale Schüttgutaustragvorrichtung erreicht. Da beidseitig des Trägeres (3) keine Übertragung unerwünschter Bewegungen auf vor- oder nachgeschaltete Systeme erfolgt, ist es sogar möglich, eine erfindungsgemäße Schüttgutaustragvorrichtung für Verwiegeeinrichtungen zu verwenden, die bekanntermaßen in Bezug auf Schwingungen recht störanfällig sind. Zur Abführung des Schüttgutes bildet der Unterflansch (4.2) des Auslaufkompensators einen Auslaufflansch, an dem ein, in der Figur 1 nicht dargestelltes, steuer-oder regelbares Absperrorgan montiert ist, um im Bedarfsfall den Schüttgutaustrag zeitweilig zu stoppen oder zu reduzieren.

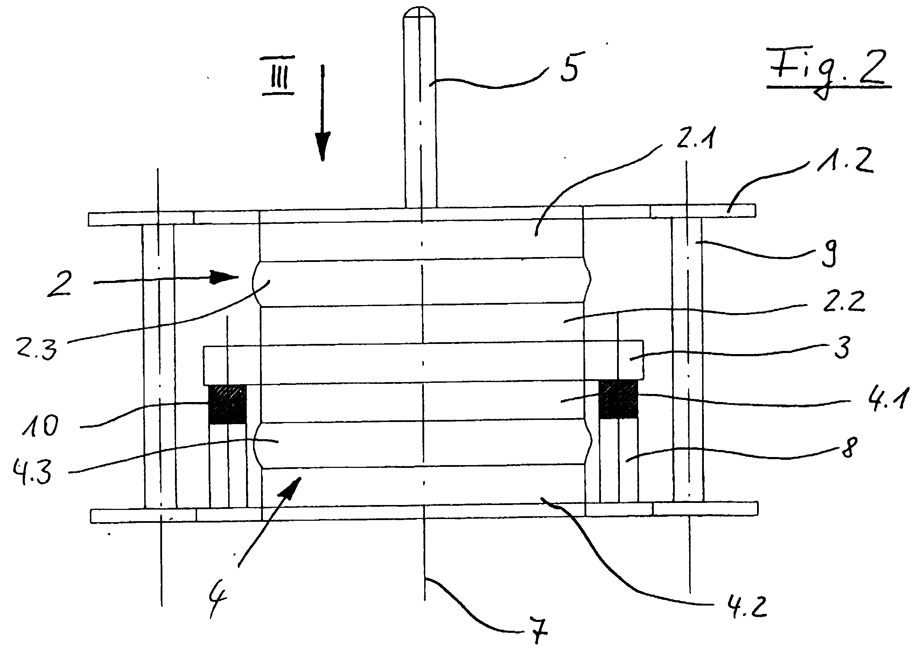

Aus der Darstellung in Figur 2 geht eine weitere mögliche Ausführung einer erfindungsgemäßen Schüttgutaustragvorrichtung hervor.
Diese weist ein einteiliges, mittig auf dem Träger (3) angeordnetes Austragswerkzeug (5) auf, das vorliegend aus einem einfachen Dorn besteht.
Unterhalb des Anschlußflansches (1.2) ist ein erstes Entkopplungsorgan (2) montiert, das wie zuvor bereits beschrieben baugleich mit dem zweiten, unterhalb des Trägers (3) montierten Entkopplungsorgan (4.3) ist. Beide Entkopplungsorgane weisen einen Oberflansch (2.1, 4.1) sowie einen Unterflansch (2.2, 4.2) auf, die jeweils über ein Dichtelement (2.3, 4.3) miteinander verbunden sind.
An dem Träger ist ferner ein in der Figur 2 nicht gezeigtes Erregeraggregat angeschlossen. Zwischen dem Träger (3) und dem Unterflansch (4.2) der seinerseits in ein einen Auslaufflansch bildendes Blechelement übergeht, sind mehrere, über den Umfang verteilte Zugslangen (9) montiert. Über die Stabilisatoren (8) wird die Masse des Erregeraggregates ausgeglichen. Diese weisen in ihrem oberen Drittel Dämpfer (10) auf. Als Dämpfer können beispielsweise Gummipuffer oder Federn verwendet werden.

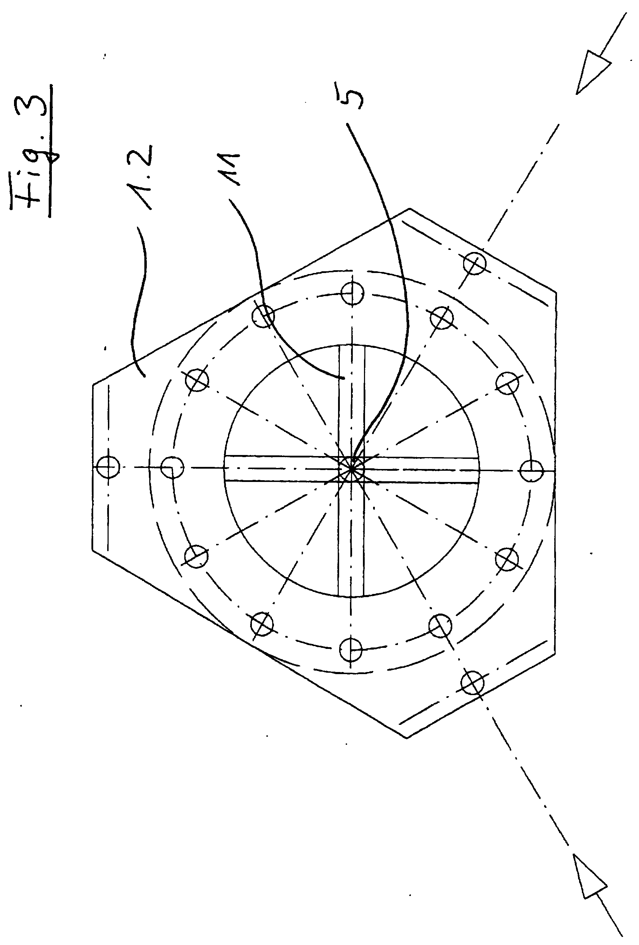

In der Figur 3 ist die Ansicht einer erfindungsgemäßen Schüttgutaustragvorrichtung gemäß der Pfeilrichtung III in Figur 2 gezeigt. Dabei ist die fertigungstechnisch günstige Form eines erfindungsgemäßen Anschlußflansches (1.2) erkennbar. Bei dieser Geometrie ermöglich der aus einem Blech herausgeschnittene Anschlußflansch (1.2) eine optimale Materialausbeute.
Das Austragswerkzeug (5) ist auf einem Achsenkreuz (11) des Trägers (3) mittig angeordnet.

### Bezugszeichenliste

- 1: Schüttgutbehälter
- 1.1: Auslauf
- 1.2: Anschlußflansch
- 1.3: Schüttgutbehälterwand
- 2: Entkopplungsorgan
- 2.1: Oberflansch
- 2.2: Unterflansch
- 2.3: Dichtelement
- 3: Träger
- 4: Entkopplungsorgan
- 4.1: Oberflansch
- 4.2: Unterflansch
- 4.3: Dichtelement
- 5: Austragswerkzeug
- 6: Erregeraggregatanbindung
- 7: Mittenachse
- 8: Stabilisator
- 9: Zugstange
- 10: Dämpfer

## Patentansprüche

1. Schüttgutaustragvorrichtung, bestehend aus wenigstens einem durch ein Erregeraggregat in oszillierende Bewegung gebrachten Austragswerkzeug (5), wobei dem Austragswerkzeug wenigstens ein Entkopplungsorgan (2, 4) vorgeschaltet ist und das Austragswerkzeug (5) unmittelbar in den freien Schüttgutdurchgangsquerschnitt des Schüttgutes montiert und einem wie auch immer gestalteten Vortagebehälter nachgeschaltet ist.

2. Schüttgutaustragvorrichtung, bestehend aus wenigstens einem Austragswerkzeug (5) und einem dieses aufnehmenden, durch ein Erregeraggregat in oszillierende Bewegung gebrachten Träger (3), wobei der Schüttgutaustragvorrichtung in Schüttgutaustragsrichtung gesehen wenigstens ein Entkopplungsorgan (2, 4) vorgeschaltet ist und das Austragswerkzeug (5) unmittelbar in den freien Schüttgutdurchgansquerschnitt des Schüttgutes montiert und einem wie auch immer gestalteten Vorlagebehälter nachgeschaltet ist.

3. Schüttgutaustragvorrichtung nach Anspruch 2,
dadurch gekennzeichnet, daß
ein jedes Entkopplungsorgan aus wenigstens einem Flansch (2.1, 4.2) mit einem gegenüber der Umgebung abdichtenden, zwischen Flansch und Träger (2) eingesetzten, elastisch verformbaren Dichtelement (2.3, 4.3) besteht.

4. Schüttgutaustragvorrichtung nach einem der Ansprüche 2 oder 3,
dadurch gekennzeichnet, daß
der Träger (3) mit dem Austragswerkzeug (5) zwischen zwei Entkopplungsorganen (2, 4), durch ein Erregeraggregat bewegbar aufgenommen ist.

5. Schüttgutaustragvorrichtung nach einem der vorhergehenden Ansprüche,
dadurch gekennzeichnet, daß
ein jedes Entkopplungsorgan (2, 4) ein Kompensator ist.

6. Schüttgutaustragvorrichtung nach einem oder mehreren der vorhergehenden Ansprüche,
dadurch gekennzeichnet, daß
das wenigstens eines der Entkopplungsorgane (2, 4) einen Oberflansch (2.1) und einen Unterflansch (2.2) aufweist, wobei durch Einrichtungen, wie beispielsweise Stabilisatoren (8), bezogen auf die Mittenachse (7), eine Längenausdehnung des Entkopplungsorgans in axialer Richtung begrenzt ist.

7. Schüttgutaustragvorrichtung nach Anspruch 6,
dadurch gekennzeichnet, daß
zwischen einem Anschlußflansch (1.2) am Auslauf des Schüttgutvorratsbehälters (1) und einem untersten, den Auslauf bildenden Unterflansch (4.2) zusätzliche Stabiliserungseinrichtungen, wie beispielsweise Zugstangen (9), montiert sind.

8. Schüttgutaustragvorrichtung, nach Anspruch 7,
dadurch gekennzeichnet, daß
an den untersten, den Auslauf bildenden Unterflansch (4.2) ein steuer-oder regelbares Absperrorgan montiert ist.

9. Schüttgutaustragvorrichtung nach einem oder mehreren der vorhergehenden Ansprüche,
dadurch gekennzeichnet, daß
das Austragswerkzeug (5) einteilig oder mehrteilig ausgeführt ist.

10. Schüttgutaustragvorrichtung nach einem oder mehreren der vorhergehenden Ansprüche,
dadurch gekennzeichnet, daß
das Austragswerkzeug (5) symmetrisch oder asymmetrisch zur Mittenachse (7) der Schüttgutaustragvorrichtung ausgeführt ist.

11. Schüttgutaustragvorrichtung nach einem der Ansprüche 2 bis 10,
dadurch gekennzeichnet, daß
das Austragswerkzeug (5) und der dieses aufnehmende Träger (3) lösbar miteinander verbunden sind.

12. Schüttgutaustragvorrichtung nach einem oder mehreren der vorhergehenden Ansprüche,
dadurch gekennzeichnet, daß
an den Oberflanschen (2.1, 4.1) Leitbleche (8) angebracht sind.
